# EUROPEAN PATENT APPLICATION

(11) **EP 4 628 471 A1**
(43) Date of publication of application: **08.10.2025**
(21) Application number: 25168910.5
(22) Date of filing: 07.04.2025
(51) Int. Cl.: C04B 35/80, F01C 19/00, F16J 9/26, C04B 35/447, C04B 35/50, C04B 35/565, C04B 35/573, C04B 35/583, C04B 35/584, C04B 35/591, C04B 35/628

(54) **CERAMIC MATRIX COMPOSITE PARTS AND METHODS FOR THEIR PRODUCTION**

(30) Priority: 05.04.2024 US 202418627656
(71) Applicant: RTX Corporation, Farmington, CT 06032 (US)
(72) Inventor: SUDRE, Olivier, Farmington, 06032 (US)
(74) Representative: Dehns

(57) **Abstract**

A ceramic composite sealing ring (10), high-pressure compressor of a gas turbine engine assembly including a ceramic composite sealing ring (10) and method for making a high-pressure compressor of a gas turbine engine assembly. The ceramic composite material is composed of unidirectional aligned fibers (20) which may be encapsulated by a ceramic matrix (30). The piston seal ring (10) of the high-pressure compressor of a gas turbine engine assembly is positioned at the interface of the tie shaft (100) and the integrated blade rotor (110).

## Description

### Field of the Invention

The present application relates to ceramic matrix composite materials. In particular, the present application relates to ceramic matrix composite materials for use in manufacturing piston seal rings (PSRs), for example, PSRs for high pressure compressors used in gas turbine engines.

### Background

Components subjected to high thermal environments, for example, such as piston seal rings in gas turbine engine compressors, are susceptible to degradation due to the high temperature exposure and vibration exposure. As a result, conventional piston seal rings have limited operational lifespans.

Typical piston seal rings comprise a cobalt based chromium, tungsten alloy, coated with a Cu-Al coating (applied by atmospheric plasma spraying (APS)) to which a dry-film lubricant is applied. During repeated operational cycles, the dry-film lubricant wears away exposing the Cu-Al coating thus leading to eventual degradation of the base alloy material of the piston seal ring.

There is constant desire in the art to improve the durability and operational lifespan of components exposed to high temperature environments, particularly rotating/moving ceramic matrix composite parts such as piston seal rings used in gas turbine engine compressors.

### Summary of the Invention

In some embodiments of this disclosure, a ceramic matrix composite sealing ring is provided. The ceramic matrix composite material of the seal ring has a generally ring shape and includes unidirectionally aligned fibers within a ceramic matrix.

In some embodiments of the disclosure, a high-pressure compressor of a gas turbine engine assembly is provided. The high-pressure compressor includes a tie shaft, an integrated blade rotor, and a ceramic composite piston seal ring. The piston seal ring is made of a ceramic matrix composite material and has a generally ring shape. The ceramic matrix composite material includes unidirectionally aligned fibers within a ceramic matrix.

In some embodiments of the disclosure, a method for making high-pressure compressor of a gas turbine engine assembly is provided. The method includes assembling a ceramic composite piston seal ring at an interface of the tie shaft and the integrated blade rotor. The piston seal ring is made of a ceramic matrix composite material and has a generally ring shape. The ceramic matrix composite material includes unidirectionally aligned fibers within a ceramic matrix.

### Brief Description of the Drawings

Implementations of the inventive concepts disclosed herein may be better understood when consideration is given to the following detailed description thereof. Such description refers to the included drawings of a piston seal ring, which is an example of ceramic matrix composite of this application. These drawings are not necessarily to scale, and which some features may be exaggerated and some features may be omitted or may be represented schematically in the interest of clarity. Like reference numerals in the drawings may represent and refer to the same or similar element, feature, or function. In the drawings:
Fig. 1 is a cross-sectional view of an exemplary ceramic matrix composite part, for example, a piston seal ring.
Fig. 2 illustrates the ceramic matrix composite part where one or more sides are optionally coated or treated to reduce wear and friction.
Fig. 3 is a perspective view of a piston seal ring.
Fig. 4 illustrates a cross sectional view of a high-pressure compressor showing a seal assembly where the piston seal ring is positioned relative to a tie shaft and an integrated blade rotor.
Fig. 5 illustrates a perspective view of a piston seal ring positioned on a tie shaft.

### Detailed Description

Interfacing components, particularly those components which interface with rotating/moving parts such as a sealing ring, for example, a rotor seal ring or a piston seal ring (PSR), are subject to degradation over extended use in high temperature environments which limits their operational lifespan. To address this degradation and increase their operational lifespan, the present disclosure describes a molded or surface polished composite article, such as a PSR, made of unidirectional ceramic or carbon fibers encapsulated in a ceramic matrix.

CMC includes ceramic-based fibers in a ceramic-based matrix. The fibers can be carbide, oxide, or carbon fibers, or a combination thereof, and may optionally be coated with an interface coating. The matrix can be a glass, cermet, or other ceramic-based material, or combinations thereof.

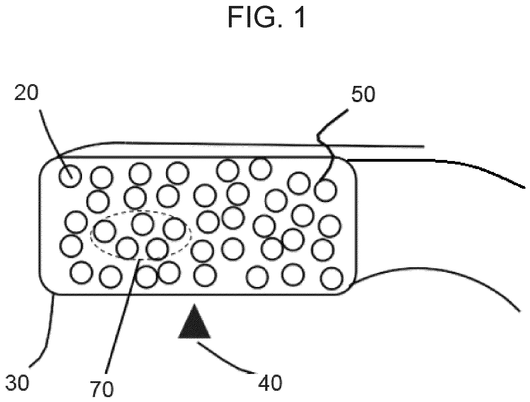

Figure 1 shows the internal structure of an embodiment of a ceramic matrix composite material (40) in cross section wherein fibers or tows (70) are aligned unidirectionally and are encapsulated in a ceramic matrix (30). Thus, the combination of unidirectional fibers (20) surrounded by ceramic matrix (30) forms the ceramic matrix composite (40). The ceramic matrix composite (40) also may include an interface coating (50) on the fibers (20) of a tow (70). The interface coating (50) may be various thicknesses from .2 to 1 microns, for example, .5 microns. the fiber (20) may be coated with a coating that is about 0.5 micron. Other layers can also be added before the matrix is infiltrated by various means.

Fibers (20) may have different diameters. The fibers (20) can optionally be small diameter fibers with diameters of 8-15 microns, for example, 13 microns. The fibers (20) can optionally be large SiC fibers with diameters of 50 to 200 micron diameter, for example, nominal diameters of 120 microns.

Non-oxide fibers may typically be used, for example, polycrystalline SiC fibers (amorphous or crystalline) including elements such as boron (B), carbon (C), nitrogen (N), titanium (Ti), or silicon (Si). Other examples of acceptable fiber compositions may include SiC-O fibers, Si-Ti-C-O fibers, Si-Zr-C-O fibers, SiBN₃C fibers, and silicon nitride (Si₃N₄) fibers. Some acceptable fibers are commonly used in ceramic matrix composites under trade names such as NICALON^{®} SiC fibers, and TYRANNO^{®} for the smaller diameter fibers or SCS SiC fibers for the larger diameter fibers. Ceramic oxide fibers may also be used. Ceramic Oxide fibers include oxide compounds, such as alumina (Al₂O₃), mullite (3Al₂O₃-2SiO₂), and zirconia (ZrO₂). Oxide fibers are generally polycrystalline.

The fibers (20) can optionally be arranged into bundles of fibers (20) referred to as tows (70). In the composite, the tows (70) are arranged unidirectionally within the ceramic matrix (30) and encapsulated by the ceramic matrix (30). The tows (70) can optionally be in the form of various weaves, braids, etc. but keep their mostly unidirectional nature with fibers direction preferably less than 10 degrees mis orientation with the ring circumferential axis. A ceramic matrix composite (40) may comprise a mixture of smaller and larger tows (70) or tows (70) of only a single general size.

The ceramic matrix (30) can be, for example, a glass, glass-ceramic or other crystalline material such as boron nitride, SiC, Si-bonded SiC, Si₃N₄, or reaction bonded Si₃N₄. Other types of matrices, such as lanthanum phosphate (LaPO₄) and more generally rare-earth phosphates or oxides could also be used. Additionally, the matrix may include a layered structure crystalline phase such as mica or other phyllosilicates to provide enhanced friction properties or may be less abrasive than nitrides or carbides.

The grain size of the ceramic matrix (30) may be kept small, for example, less than 2 microns, less than 1.5 microns, less than 1 micron, or less than 0.5 microns. A smaller grain size prevents large local defects or stress concentration at the surface ensuring smoothness over time. Such small grain sizes in the matrix can be achieved via specific thermal heat treatments of, for example, glass-ceramic matrices, or by choosing submicron powders when manufacturing unidirectional tapes of fibers before consolidation of the composite.

The ceramic matrix material (30) can be combined with the fibers (20) from known techniques of ceramic matrix composite manufacturing. For example, the fiber tows (70) can be wound into a preform shape. The preform can be then injected by a molten glass or ceramic matrix using a technique such as injection molding. Alternatively, or in combination, the preform can be first infiltrated by a powder slurry and then infiltrated by a molten glass or a molten ceramic matrix material (30).

In a further example, the fibers (20) may be first passed through a powder slurry wound to form a continuous unidirectional fiber/tape. The preform is then transformed into a ceramic matrix composite (40) by hot pressing or current/voltage assisted pressure techniques or by melt infiltration.

Powders of BN, LaPO₄, Mica or silicon carbide or nitrides can be used. Reaction bonded silicon carbide (RBSiC) using carbon powder followed by melt infiltration of a silicon alloy or reaction bonded silicon nitride (RBSN) using silicon nitride powder infiltrated by a silicon alloy melt. The composites (40) are formed so that the matrix (30) encapsulates the fibers (20) and to avoid the presence of any fibers (20) or any part of the fibers (20) on the surface of the matrix (30). Fibers (20) at the surface would result in weak surface locations that could trigger abrasion, chipping of the ring, and formation of debris. Encapsulating the fibers (20) within the matrix (30), and optionally providing an interface coating (50), for example, an oxidation-resistant interface coating, between the fibers (20) and the matrix (30), can increase resistance to oxidation and improves the longevity of the ceramic matrix composite (40).

The coefficient of the matrix thermal expansion of the ceramic matrix (30) may be below that of the fibers (20) so as to place the matrix under compression imparting more resistance to crack formation when exposed to high temperature environments and mechanical loads that could trigger abrasion, chipping of the ring, and formation of debris.

As mentioned above, the fibers (20) may be provided with an interface coating (50), i.e., a coating between each fiber (20) and the matrix (30). These interface coatings (50) can enhance the strength of the composite or provide beneficial properties. For example, single interface coatings (50) such as carbon or boron nitride are known to provide toughness to the composite in cases where a crack initiates and propagates in the ceramic matrix. Other more complex, more oxidation resistant interface coatings (50) are also envisioned. Such interface coatings (50) can be multilayer coatings made of, for example, doped carbon (such as boron-doped carbon), boron nitrides (such as silicon-doped BN), silicon nitride, or other layers. For example, interface coatings (50) may include a carbon-based layer disposed on each fiber (20) and a boron-nitride based layer disposed on the first carbon-based layer. These coatings can be made using a vapor phase deposition process or other suitable process known in the art.

The fibers (20) may be dispersed relatively evenly but otherwise randomly dispersed in the ceramic matrix (30). However, it is desirable for no fibers (20) to appear on an outer surface of the composite (40). If the composite contains individual fibers (20), rather than tows (70), the individual fibers (20) are generally not in physical contact with other fibers (20) and embedded in the ceramic matrix (30) so that individual fibers (20) are isolated from one another by the ceramic matrix (30). Conversely, if the composite contains tows (70), the individual tows (70) are entirely physically encompassed by the ceramic matrix (30) and the tows (70) are homogeneously distributed throughout the ceramic matrix (30) and encapsulated by the ceramic matrix (30).

The ceramic matrix composite (40) can be made in, for example, a near net shape (NNS) which is a manufacturing technique that produces components that are near their final shape and dimensions. Herein such is achieved by winding fibers (20) impregnated into a cavity which is near net shaped and pressing the composite to a finished product. It is also possible to wind the fibers (20) into a cylinder shape and cut individual rings where a post heat treatment or an additional coating on the surface is optionally provided to prevent the presence of fibers (20) being positioned on any surfaces which experience friction. That is, to minimize/prevent fibers (20) from appearing on an external surface of the ceramic matrix composite (40).

The ceramic matrix composite (40) in the form of, e.g., a composite PSR, in general, has low porosity as measured by traditional techniques known to practitioners in the art, for example, mercury porosimetry, helium pycnometry, image analysis and water absorption. The density of the composite (40) is above about 85%, for example, 95% or greater.

As will be appreciated by one skilled in the art, the embodiments described herein may be embodied as a ceramic composite material, for example, a ceramic composite piston seal ring with surfaces which must interface with rotating parts in high temperature environments, or as a high-pressure compressor for a gas turbine engine includes a ceramic composite piston seal ring which provides advantageous wear resistance to the high-pressure compressor and gas turbine engine assembly.

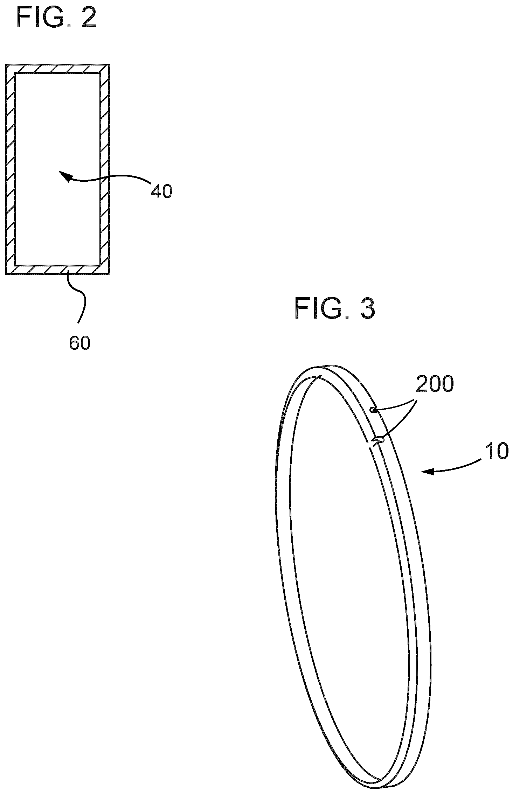

Fig. 2 shows the ceramic matrix composite (40) with an optional single layer (60) coating or treatment applied to reduce wear and/or friction.

The surface of the ceramic matrix composite (40) can be treated to decrease its porosity. For example, a thin coating can be applied to the surface of the ceramic matrix composite (40) and possibly reacted with the matrix (30) at the surface of the ceramic matrix composite (40) as post-consolidation steps. The coating (60) or surface modification can decrease friction or improve near surface properties of the ceramic matrix composite (40). Diffusion of cations into glass and ceramic matrix composites can, for example, provide additional compression on the surface and improve crack initiation resistance.

Fig. 3 shows a perspective view of an exemplary PSR (10). In this embodiment, the PSR is a ceramic composite structure made of unidirectional fibers (20) aligned along the circumference direction. Whereas in some cases, composite seal rings may comprise a plurality of rings, the embodiment shown in Fig. 3 illustrates that the composite PSR (10) is a single ring made of a ceramic matrix composite (40) suitable for use in high temperature environments.

The surface of the seal ring has sufficient smoothness and a relatively soft/low modulus such that it is compatible and suitable for use with parts/components made of metallic alloys. The smoothness of the seal ring surface can be directly imparted by processing. For example, the composite can be provided with a smooth surface by hot pressing in a graphite mold. In other embodiments, the composite surface can be polished to provide the desired smoothness.

In some embodiments, the matrix material can exhibit several phases. For example, regions within the matrix may undergo crystallization such that a glass ceramic matrix is formed. In other cases, sliding or deformable structural elements such as rare-earth phosphates or layered silicates can be added to the powder prior to consolidation to form phases within the composite.

The seal ring typically includes a cut (200) in one or more locations to be positioned in its cavity along the shaft. The composite seal ring can be cut using techniques such as or diamond saw, water-guided lasers or other know cutting techniques.

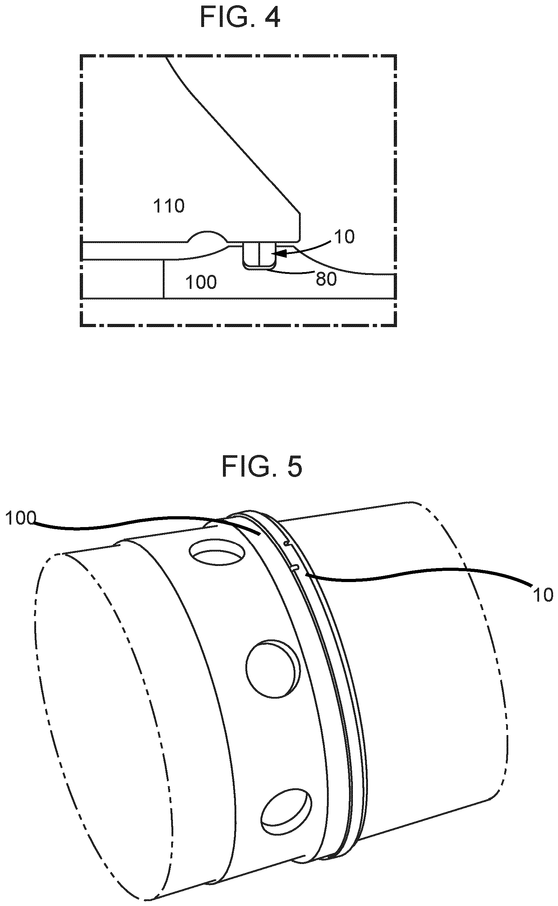

Fig. 4 shows a piston ring seal assembly with piston seal ring (10) interfacing with a tie shaft (100) and integrated blade rotor (110). In general, a gas turbine engine includes a fan section, a high-pressure compressor section, a combustor section, and a turbine section. Air is compressed in the compressor section and sent to the combustion section where it mixes with fuel and is ignited. This creates hot exhaust gas flow which drives the compressor and the fan section.

The seal assembly includes the piston seal ring (10) positioned in an annular groove (80) defined in the tie shaft (100). The piston seal ring (10) is therefore positioned between and at the interface of the tie shaft (100) and an integrated blade rotor (110). When the tie shaft (100) and blade rotor (110) rotate relative to each other, the piston seal ring (10) takes on the relevant stresses and wear.

The unidirectional orientation of the fibers (20) within the composite piston seal ring (10) provides the strength needed to survive the high temperature and stress environment encountered between the tie shaft (100) and the integrated blade rotor (110). The use of the smooth and inert surface of the ceramic matrix composite (40) used for the piston seal ring (10), enhances the durability and increases the operational life span of the piston seal ring (10).

The integrated blade rotor (110) may also be positioned on top of the tie shaft (100). The tie shaft (100) and integrated blade rotor (110) are not in physical contact with each other, but instead the piston seal ring (10) is in contact with both the integrated blade rotor (110) and the tie shaft (100). It should be understood that the physical shapes of the piston seal ring (10), tie shaft (100), and integrated blade rotor (110) depicted in Fig. 4 are not necessarily the exact shape of these structures in all embodiments but are representative of these physical structures.

Fig. 5 is a perspective view of a piston seal ring (10) at the interface of a tie shaft (100). The connection between the tie shaft (100) and an integrated blade rotor (not shown in Fig. 5) is enabled by the piston seal ring (10) which functions to provide a durable suitable interface to address stresses imposed by, for example, rotational movement, high temperatures, and vibration.

The piston seal ring (10) formed from the ceramic composite (40) can operate in an elastic regime. In the case of failure, the seal ring will fail progressively rather than catastrophically. The seal ring also has a smooth surface and may have a soft/low modulus surface of glass which allows the seal ring to be compatible with metallic alloys which it will come in contact with when positioned inside of, for example, a high-pressure compressor.

While the above discussion addresses the use of seal rings (10) in connection with a tie shaft and blade rotor, seal rings (10) can be used in other roles. The seal ring (10) may also be a part of a gas turbine engine assembly and positioned between parts which may rotate as a rotor seal ring. The seal ring (10) can be optimized to minimize wear due to high temperature, rotation, and vibration stresses.

The above concepts may also be applied to provide low friction and wear resistant piston seal rings (10) for high pressure compressor (HPC) rotors which operate with higher efficiency at wide range of temperatures and environments. The enhanced sealing provides higher endurance and reliability for engine components and also significantly reduces engine overhaul cost.

Structures made with the ceramic matrix composite (40) may be used in high temperature applications, for example, in aerospace as friction materials in aircraft applications, for example, high temperature compressors of, for example, gas turbine engines.

The corresponding structures, material, acts, and equivalents of all means or steps plus function elements in the claims below are intended to include any structure, material, or act for performing the function in combination with other claimed elements are specifically claimed. The description of the embodiments described herein has been presented for purposes of illustration and description, but is not intended to be exhaustive or limited to the invention in the form disclosed. Many modifications and variations will be apparent to those of ordinary skill without departing from the scope and spirit of the invention. The embodiments were chosen and described in order to best explain the principles of the invention and the practical application, and to enable others of ordinary skill in the art to understand the invention for embodiments with various modifications as are suited to the particular use contemplated.

Modifications and equivalents may be made to the features of the claims without departing from the spirit or scope of the invention. Thus, it is intended that the embodiments described herein covers the modifications and variations disclosed above provided that these changes come within the scope of the claims and their equivalents.

## Claims

1. A ceramic composite sealing ring (10) comprising:
a ceramic composite material having a generally ring shape wherein said ceramic composite material comprises:
unidirectionally aligned fibers (20) within a ceramic matrix (30).

2. The ceramic composite sealing ring (10) of claim 1, wherein the ceramic matrix (30) comprises a glass, glass-ceramic or a crystalline material comprising SiC, Si- bonded SiC, Si₃N₄, and/or reaction bonded Si₃N₄; or
a layered structure comprising lanthanum phosphate, rare-earth phosphates, and/or oxides.

3. The ceramic composite sealing ring (10) of claim 1 or 2, wherein the unidirectional aligned fibers (20) are coated with an interface coating (50).

4. The ceramic composite sealing ring (10) of claim 3, wherein the interface coating (50) is carbon or boron nitride.

5. The ceramic composite sealing ring (10) of claim 3 or 4, wherein the interface coating (50) includes a carbon-based layer disposed on each ceramic fiber of the plurality of ceramic fibers (20) and a boron-nitride based layer disposed on the first carbon-based layer.

6. The ceramic composite sealing ring (10) of any preceding claim, wherein the coefficient of the matrix thermal expansion of the ceramic matrix (30) is below that of the fibers (30).

7. The ceramic composite sealing ring (10) of any preceding claim, wherein the grain size of the ceramic matrix (30) is less than 2 microns.

8. The ceramic composite sealing ring (10) of any preceding claim, wherein the fibers (20) are 8-15 microns in diameter.

9. The ceramic composite sealing ring (10) of any preceding claim, wherein the unidirectional aligned tows are completely encapsulated by the ceramic matrix (30).

10. The ceramic composite sealing ring (10) of any preceding claim, wherein the sealing ring (10) is a piston seal ring or a rotor seal ring.

11. A high-pressure compressor of a gas turbine engine assembly comprising:
a tie shaft (100);
an integrated blade rotor (110); and
the ceramic composite piston seal ring (10) of any preceding claim, wherein the ceramic composite piston seal ring (10) is positioned at an interface of the tie shaft (100) and the integrated blade rotor (110).

12. A method for making a high-pressure compressor of a gas turbine engine assembly comprising:
assembling a ceramic composite piston seal ring (10) at an interface of a tie shaft (100) and an integrated blade rotor (110),
wherein the ceramic composite piston seal ring (10) comprises:
a ceramic composite material having a generally ring shape wherein said ceramic composite material comprises:
unidirectionally aligned fibers (20) within a ceramic matrix (30).
